# EUROPÄISCHE PATENTSCHRIFT

(11) **EP 2 612 435 B1**
(45) Veröffentlichungstag und Bekanntmachung des Hinweises auf die Patenterteilung: **11.07.2018**
(21) Anmeldenummer: 11743490.2
(22) Anmeldetag: 26.07.2011
(51) Int. Cl.: H02P 25/06, H02P 23/06, H02H 1/00, H02M 3/335, H02M 7/5387, H02M 3/156

(54) **STEUERSCHALTUNG FÜR EINEN ELEKTROMOTOR MIT EINEM STROMVERSORGUNGSSTEUERGERÄT**
CONTROL CIRCUIT FOR AN ELECTRIC MOTOR HAVING AN ELECTRICAL POWER SUPPLY CONTROL UNIT
CIRCUIT DE COMMANDE POUR UN MOTEUR ÉLECTRIQUE COMPORTANT UN APPAREIL DE COMMANDE D'ALIMENTATION EN TENSION

(30) Priorität: 31.08.2010 CH 14182010
(43) Veröffentlichungstag der Anmeldung: 10.07.2013
(73) Patentinhaber: ETEL S.A., 2112 Môtiers (CH)
(72) Erfinder: BLANC, Didier, CH-1299 Crans-près-Céligny (CH); COLEMAN, Ralph, CH-2114 Fleurier (CH); VAUCHER, Jean-Marc, CH-2108 Couvet (CH); FROIDEVAUX, Claude, CH-2300 La Chaux-de-Fonds (CH)
(74) Vertreter: Pleyer, Hans Anno
(86) Internationale Anmeldenummer: PCT/EP2011/062806
(87) Internationale Veröffentlichungsnummer: WO 2012/028390

(56) Entgegenhaltungen:
- JP-A- 2007 202 300
- US-A1- 2005 156 583
- Analog Devices: "AD7400 Isolated Sigma-Delta Modulator", , 1. September 2007 (2007-09-01), XP055049402, www.analog.com Gefunden im Internet: URL:www.analog.com [gefunden am 2013-01-11]
- Martin Schulz: "A Progressive Way to Integrate Current Measurement into Modern Power Electronic Systems (Infineon - Editorial - PCIM Europe 2008 - Integration of current measurement.pdf)", , 6. Juni 2008 (2008-06-06), XP055049548, pcim europe 2008 Gefunden im Internet: URL:http://www.infineon.com/dgdl/Infineon - Editorial - PCIM Europe 2008 - Integration of current measurement.pdf?folderId=db3a30431a5c32f20 11a5ddf6539008d&fileId=db3a30431a5c32f2011 a5de38fc20094 [gefunden am 2013-01-14]

## Beschreibung

Die vorliegende Erfindung betrifft das Gebiet der Elektromotoren, insbesondere der Linearmotoren und im Besonderen jene, deren Elektromotor-Steuerung mit einem Steuergerät ein präzises Antreiben des Motors ermöglichen.

Die Elektromotoren, die in Werkzeugmaschinen und in diversen industriellen Installationen verwendet werden, werden oft derart gesteuert, dass eine vorgegebene Sollwertposition erreicht wird. In diesem Zusammenhang implementiert man in der Steuerung solcher Elektromotoren eine Hauptsteuerschleife, um eine Ist-Position des beweglichen Teils des Motors auf eine Sollwertposition einzustellen. Die Differenz der Position wird über eine elektronische Steuereinheit verarbeitet, die einen Sollwert des Versorgungsstroms bestimmt. Die Versorgungsmittel des Motors sind daher dazu ausgebildet, den Motor (jede seiner Phasen) derart zu versorgen, um einen Versorgungsstrom zu erzeugen, der mit dem Sollwertstrom korrespondiert. Um die Präzision der vorgesehenen Bewegung sicherzustellen, empfiehlt es sich, sich zu versichern, dass der Ist-Strom mit dem Soll-Strom übereinstimmt. Dies wird über eine Messung des Stroms an jeder Versorgungsphase (nachfolgend wird aus Gründen der Klarheit der Darstellung der Erfindung lediglich eine Phase berücksichtigt) und mit einer zweiten Steuerschleife durchgeführt, die den gemessenen Versorgungsstrom auf den Soll-Strom einstellt.

Die JP2007202300A offenbart eine Steuerschaltung eines Elektromotors, wobei die Steuerschaltung über einen ersten Digital-Analogkonverter ein Steuersignal für die elektrischen Hochspannungsversorgungsmittel der Phase erzeugt und eine Steuerung des Versorgungsstroms der Phase über einen Soll-Strom aufweist, wobei die elektrischen Versorgungsmittel eine Hochspannungszone des Elektromotors bestimmen, und wobei die Steuerschaltung Mittel zum Messen des Versorgungsstroms, die ein erstes Analogsignal bereitstellen, dessen Wert mit dem Soll-Strom korrespondiert und eine elektronische Steuereinheit, die in einer Niederspannungszone angeordnet ist umfasst.

Das Datenblatt zum Baustein "AD7400 Isolated Sigma-Delta Modulator" der Firma Analog Devices (Dokument XP055049402) beschreibt einen Analog-Digitalkonverter, der in einer Hochspannungszone angeordnet ist, wobei ein galvanisches Trennelement zwischen dem Analog-Digitalkonverter und der elektronischen Steuereinheit angeordnet ist.

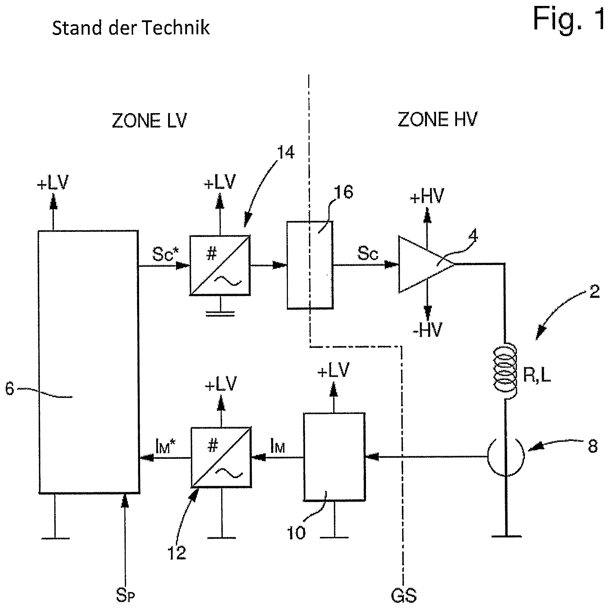

Ein klassisches generelles Schema einer Motorsteuerung ist in Fig. 1 gezeigt. Eine Phase 2 (R, L) wird über einen Leistungsverstärker 4 gespeist, welcher selbst über die Hochspannung HV (zum Beispiel 300 Volt) versorgt wird. Die elektronische Steuereinheit 6 empfängt am Eingang ein Positionssignal S_{P} zur Positionssteuerung und ein Mess-Signal I_{M}* des elektrischen Stroms in der Phase 2. Wenn sich die elektronische Einheit in einer Niederspannungszone (Zone LV) und die Phase 2 in einer Hochspannungszone (Zone HV) befindet, wird die Messung des Stroms im Normalfall über Sensormittel magnetischen Typs durchgeführt, die einen Ferritring 8 aufweisen, der um einen Leiter herum angeordnet ist, welcher die Phase 2 bildet sowie über eine elektronische Schaltung 10 zur Verarbeitung des elektrischen Signals, welches vom Detektionselement des im Ferritring vorhandenen magnetischen Flusses erzeugt wird. Eine solche Messeinrichtung ist natürlich galvanisch von der Phase getrennt. Die elektronische Schaltung 10 wird von der Niederspannung versorgt und befindet sich in der Zone LV. Ein Element zur galvanischen Trennung, welches zur Übertragung eines Analogsignals geeignet ist, ist nicht notwendig. Man beachte, dass ein solches Element relativ komplex ist und dass eine hohe Übertragungspräzision eines Analogsignals über eine galvanische Trennung nur schwierig erreicht werden kann. Aus diesem Grund wählt der Fachmann zur Messung des Stroms einen Hall-Sensor oder einen Sensor des Typs "Fluxgate", wie er insbesondere in der Patentschrift US 4,914,381 beschrieben ist. Allerdings sind solche Magnetsensoren besonders empfindlich im Hinblick auf Umgebungsmagnetfelder, die Fehler der Messung erzeugen. Das Signal-Rausch-Verhältnis ist mit solchen Magnetsensoren derart unvorteilhaft, dass die Präzision der Strommessung in der Phase hierdurch beeinträchtig wird.

Die elektronische Schaltung 10 des Sensors erzeugt ein analoges Messsignal I_{M}, welches in ein digitales Signal I_{M}* mittels eines Analog-Digitalwandlers 12 umgewandelt wird, der ebenfalls in der Niederspannungszone liegt. Auf der Basis dieses Messsignals, bestimmt die elektronische Schaltung 6 den Wert des Steuersignals S_{C}*, welches bevorzugt von einem Digital-Analogkonverter 14, der sich in der Zone LV befindet und anschließend mittels einer galvanischen Trenneinrichtung erzeugt wird, die dazu ausgebildet ist, die Analogsignale zu übertragen und eine galvanische Trennung GS festzulegen. Das äquivalente Analogsignal Sc wird vom Leistungsverstärker 4 verstärkt. Wie bereits zuvor erwähnt, ist die galvanische Trenneinrichtung 16 relativ komplex und die Präzision der Übertragung des Analogsignals Sc über die Einrichtung ist nicht besonders hoch. Eine alternative, vom Fachmann anvisierte Lösung besteht darin, den Leistungsverstärker mit einem Signal zu beaufschlagen, das über die Pulsbreite moduliert und direkt von der galvanischen Trenneinrichtung mittels Ein- und Austastung erzeugt wird. Dies bereitet ein weiteres Problem der Präzision des Steuersignals, derart, dass die Übertragung des modulierten Signals ein parasitäres Signal erzeugt, welches am Eingang des Leistungsverstärkers analog zu filtern ist. Diese Filterung wird durch die Wahl einer erhöhten Frequenz für die Übertragung des Signals vereinfacht, ist aber zum Nachteil der Auflösung der Modulation der Pulsbreite, welche insoweit unzureichend wird, wie dies in der Einleitung des Patents US 7,692,465 erläutert ist. Die Filterung kann sich zudem in der Phase 2 selbst niederschlagen, wenn ein Leistungsverstärker im Schaltmodus verwendet wird, diese Option ist aber nicht vereinbar mit den an die vorliegende Anwendung gestellten Anforderungen hinsichtlich Präzision.

Die Steuerung des Elektromotors im zuvor erläuterten Stand der Technik wirft Präzisionsprobleme, zunächst im von der elektronischen Steuereinheit 6 erzeugten Messsignal I_{M}* und nachfolgend im von der elektrischen Versorgung des Motors erzeugten Steuersignal S_{C} auf. Ziel der vorliegenden Erfindung ist es, diese Probleme durch Bereitstellen einer effizienten und präzisen Steuerschaltung zu lösen, dabei die Herstellungskosten zu begrenzen, insbesondere durch Vermeidung der Anordnung komplexer und kostspieliger Elemente in der Steuerschaltung.

Die vorliegende Erfindung betrifft eine Steuerschaltung eines Elektromotors, die zumindest eine Phase aufweist, wobei die Steuerschaltung über einen ersten Digital-Analogkonverter ein Steuersignal für die elektrischen Hochspannungsversorgungsmittel der Phase erzeugt und eine Steuerung des Versorgungsstroms der Phase über einen Soll-Strom aufweist, wobei die elektrischen Versorgungsmittel eine Hochspannungszone (Zone HV) des Elektromotors bestimmen. Die Steuerschaltung umfasst:
- Mittel zum Messen des Versorgungsstroms, die ein Analogsignal bereitstellen, dessen Wert mit dem Soll-Strom korrespondiert;
- eine elektronische Steuereinheit, die in einer Niederspannungszone (Zone LV) angeordnet ist;
- einen Analog-Digitalkonverter, um das Analogsignal oder ein anderes analoges Signal, welches als das Analogsignal fungiert, in ein äquivalentes Digitalsignal zu konvertieren, welches der elektronischen Steuereinheit bereitgestellt wird.

Die Steuerschaltung ist gekennzeichnet durch einen Ableitungswiderstand, auch "Shuntwiderstand" genannt, der in Reihe mit der Phase angeordnet ist und durch einen Differenzialverstärker, dessen zwei Eingänge respektive mit zwei Kontakten des Ableitungswiderstands verbunden sind; und durch die Tatsache, dass der Analog-Digitalkonverter in der Hochspannungszone angeordnet ist, ein galvanisches Trennelement zwischen dem Analog-Digitalkonverter und der elektronischen Steuereinheit angeordnet ist; und durch die Tatsache, dass die Steuerschaltung unter anderem einen DC/DC-Spannungskonverter aufweist, der in der Hochspannungszone eine erdfreie Niederspannung bereitstellt, die insbesondere den Analog-Digitalkonverter versorgt. Die Steuerschaltung ist weiterhin dadurch gekennzeichnet, dass die Steuerschaltung einen analogen Subtrahierer aufweist, der in der Hochspannungszone angeordnet ist und am Eingang das erste analoge Signal empfängt, welches dem gemessenen Strom entspricht und ein zweites analoges Signal erhält, welches dem Soll-Strom entspricht, wobei der analoge Subtrahierer an seinem Ausgang ein drittes analoges Signal bereitstellt, welches proportional zur Differenz zwischen den ersten und zweiten analogen Signalen ist und daher als Differenz zwischen dem Versorgungsstrom und dem Soll-Strom fungiert, wobei das dritte analoge Signal der elektronischen Steuereinheit über den Analog-Digitalkonverter und das erste galvanische Trennelement zugeführt wird und dem Analog-Digitalkonverter nachgeschaltet, das äquivalente digitale Signal gebildet wird.

Nach einer bevorzugten Variante wird der Spannungskonverter von der Niederspannung der Niederspannungszone versorgt und weist eine galvanische Isolierung auf.

Dank der Eigenschaften der Steuerschaltung gemäß der Erfindung, ermöglichen es ausgewählte Messmittel, eine sehr präzise Messung des Versorgungsstroms in der betrachteten Phase zu erhalten. Diese Wahl wird vom Fachmann generell aus Gründen der galvanischen Isolierung nicht beachtet. Deshalb antwortet die vorliegende Erfindung auf das spezifische Problem in einer sinnvollen Art und Weise, indem ein galvanisches Trennelement (insbesondere ein Opto-Koppler) zwischen den Messmitteln des Stroms der Phase und der elektronischen Steuereinheit vorgesehen ist. Um Erstens eine hohe Präzision in der Signalübertragung über den Opto-Koppler sicherzustellen und sodann die Kosten des Elements zu senken, ist es nach der Erfindung vorgesehen, das galvanische Trennelement dem Analog-Digitalkonverter nachgeschaltet anzuordnen, derart, dass ein digitales Signal hierüber übertragen wird. Ein einfacher Opto-Koppler erlaubt eine präzise Übertragung eines digitalen Signals; was für ein analoges Signal nicht der Fall ist. Zusätzlich ist es vorgesehen, eine erdfreie Niederspannung in der Hochspannungszone bereitzustellen, um insbesondere den Analog-Digitalkonverter zu versorgen.

Diese bevorzugte Ausführungsform ist dahingehend sehr vorteilhaft, dass der Analog-Digitalkonverter ein Messsignal erhält, welches der Differenz zwischen dem gemessenen Strom und dem Soll-Wert entspricht, das heißt ein Signal, dessen Wert unterhalb dessen des gemessenen Stroms liegt. Man kann somit eine hohe Präzision in der Konvertierung des gemessenen Analogsignals in ein digitales Äquivalent für die elektronische Steuereinheit mit einem günstigeren Konverter mit "10 oder 12 bit" oder mit "16 bit" für eine sehr hohe Auflösung erhalten. Zudem ist die bevorzugte Ausführungsform dahingehend bemerkenswert, dass der analoge Subtrahierer in der Hochspannungszone derart angeordnet ist, um den Vorteil der Ausführungsform der Erfindung mit dem Analog-Digitalkonverter vor dem galvanischen Trennelement zu erhalten. Man hat daher den üblicherweise in der elektronischen Steuereinheit vorgesehenen Subtrahierer aus der Niederspannungszone entnommen und diesen durch einen analogen Subtrahierer in der Hochspannungszone ersetzt und mit der in diese Hochspannungszone gemäß der Erfindung bereitgestellte erdfreie Niederspannung versorgt.

Schließlich erfordert diese Lösung noch die Bereitstellung des Soll-Werts für die Versorgungsspannung, die von der elektronischen Einheit in der Niederspannungszone gegenüber der Hochspannung erzeugt wird sowie jenes digitale Signal in einen rein analogen Soll-Wert zu konvertieren um diesen dem analogen Subtrahierer bereit zu stellen. Indem erneut ein galvanisches Isolationselement zwischen der elektronischen Einheit und einem Digital-Analogkonverter angeordnet wird, erhält man eine hohe Präzision für den analogen Soll-Wert und die Konfiguration der relativ einfachen und günstigen Elemente. Wenngleich diese Lösung durch die Notwendigkeit einer Vielzahl bestimmter Elemente, insbesondere durch Zusatz eines galvanischen Trennelements und eines Digital-Analogkonverters als komplex erscheint, garantiert sie eine sehr präzise Regelung des Stroms und doch eine sehr effektive Steuerung des elektrischen Motors ohne Notwendigkeit eines komplexen oder kostspieligen Elements.

Die bevorzugten Ausführungsformen der Erfindung werden in der nachfolgenden Beschreibung der Erfindung mit Hilfe der zugehörigen Zeichnungen beispielhaft und nicht einschränkend beschrieben, in welchen:
- die Figur 1,: bereits erläutert, eine klassische Steuerschaltung für einen Elektromotor zeigt;
- die Figur 2: ein Schema einer ersten bevorzugten Ausführungsform der Steuerschaltung gemäß der Erfindung ist;
- die Figur 3: eine Variante der ersten Ausführungsform gemäß Figur 2 zeigt;
- die Figur 4: ein Schema einer zweiten Ausführungsform der Steuerschaltung gemäß der Erfindung ist.

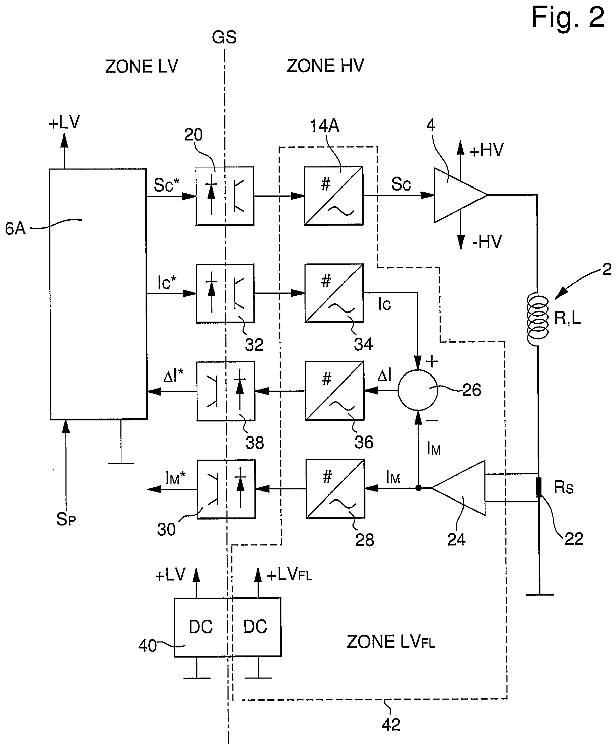

In der Figur 2 wird eine Steuerschaltung eines Elektromotors gemäß der Erfindung gezeigt. Der Motor wird durch seine Phase 2 dargestellt. Die Versorgungsmittel der Hochspannung +HV, -HV sind in klassischer Art und Weise vorgesehen und sind durch einen Leistungsverstärker 4 oder durch äquivalente Mittel ausgebildet. Der Leistungsverstärker kann linear oder im Umschaltmodus betrieben werden. Unter Berücksichtigung der hohen Ansprüche an die Präzision der vorliegenden Anwendung ist aber ein linearer Betrieb bevorzugt. Die elektronische Steuereinheit 6A wird mit Niederspannung versorgt und befindet sich in einer Niederspannungszone "Zone LV" galvanisch isoliert von der Hochspannungszone "Zone HV", wo sich die Phase 2 und ihre Versorgungsmittel 4 befinden, wie dies von geltenden Sicherheitsnormen für Hochspannungen oberhalb eines vorgegebenen Limits, zum Beispiel 48 Volt, gefordert wird.

Die elektronische Steuereinheit 6A stellt ein digitales Steuersignal S_{C}* bereit, welches, nach einer bevorzugten Variante, zunächst einem galvanischen Trennelement 20 bereitgestellt wird, um eine gute Präzision in der Übertragung des Steuersignals zu gewährleisten. Hiernach wird das digitale Signal einem Digital-Analogkonverter 14A zugeführt, der in der Zone HV angeordnet ist und wobei das analoge Steuersignal S_{C} schließlich dem Leistungsverstärker 4 zugeführt wird.

Gemäß der Erfindung werden die Mittel zum Messen des Versorgungsstroms der Phase, die zum Steuern eines Versorgungsstroms nach einem von der elektronischen Steuereinheit vorgegebenen Sollwertstrom vorgegeben sind, von einem Ableitungswiderstand Rₛ gebildet, der in Reihe mit der Phase 2 angeordnet ist und durch einen Differenzialverstärker 24, dessen zwei Eingänge an zwei Kontakten des Ableitungswiderstands angeschlossen sind. Der Differenzialverstärker 24 stellt an seinem Ausgang ein analoges Messsignal des Versorgungsstroms der Phase 2 bereit; das analoge Messsignal I_{M} wird einerseits einem analogen Subtrahierer 26 und andererseits einem Analog-Digitalkonverter 28 zugeführt, der das Signal an die Zone LV über einen Opto-Koppler 30 überträgt, welcher ein galvanisches Trennelement definiert. Man erhält auf diese Art und Weise ein digitales Signal I_{M}*, welches dem Wert des gemessenen Versorgungsstroms entspricht. Dieses Signal kann für diverse Funktionen, insbesondere der Sicherheit und des thermischen Schutzes des Motors nützlich sein. Allerdings wird, in der Darstellung der bevorzugten Ausführungsform der Figur 2, das digitale Signal I_{M}* nicht in der Steuerschleife des Versorgungsstroms verwendet. Folglich ist es nicht nötig, dass das digitale Signal eine hohe Präzision bereitstellt und man kann daher einen eine herkömmliche Auflösung aufweisenden und kostengünstigeren Konverter 28 vorsehen, der den gesamten Bereich des in der Phase zulässigen Stroms abdeckt.

Ein Soll-Wert I_{C}* (Digitalsignal) für den Versorgungsstrom wird von der elektronischen Einheit 6A bereitgestellt. Der digitale Sollwert gelangt zunächst durch ein galvanisches Trennelement 32 und wird nachfolgend einem Digital-Analogkonverter 34 zugeführt, der in der Zone HV angeordnet ist. Am Ausgang des Konverters 34 erhält man daher ein äquivalentes Analogsignal I_{C}, welches dem analogen Subtrahierer 26 zugeführt wird, welcher in der Zone HV angeordnet ist. Der analoge Subtrahierer ermittelt die Differenz zwischen den Signalen I_{M} und I_{C} und stellt ein analoges Signal ΔI bereit, welches der Differenz proportional ist. Nach der Erfindung wird dieses analoge Signal, welches der Steuerung des Versorgungsstroms dient, zunächst einem Analog-Digitalkonverter 36 zugeführt, der in der Zone HV angeordnet ist. Dem Konverter 36 nachgeschaltet, erhält man ein äquivalentes digitales Signal ΔI*, entsprechend dem analogen Signal ΔI. Es ist beachtenswert, dass das analoge Signal eine Funktion des gemessenen Signals I_{M} ist, aber dass es betragsmäßig einen vielfach geringeren Wert als das letztgenannte aufweist, üblicherweise um mehrere Größenordnungen kleiner ist als der Wert des gemessenen Signals I_{M}. Dies ist sehr vorteilhaft, da auf diese Art und Weise das Differenzsignal des Stroms ΔI über den Analog-Digitalkonverter mit einer sehr guten Auflösung konvertiert werden kann, ohne dass hierfür komplexe und kostspielige Konverter erforderlich wären. Ein "12 bit"-Konverter ermöglicht bereits eine sehr gute Auflösung für das Signal ΔI, jedoch ist der Bereich recht limitiert. Ein "16 bit"-Konverter gewährleistet eine sehr große Auflösung bei dieser Konvertierung, um der elektronischen Einheit 6A ein sehr präzises digitales Signal zuzuführen. Nach der Erfindung wird ein galvanisches Trennelement 38 dem Konverter 36 derart nachgeschaltet, dass das Element 38, insbesondere ein Opto-Koppler, vom digitalen Signal ΔI* beaufschlagt wird. Es ist leicht, ein digitales Signal mit Präzision über einen Opto-Koppler zu übertragen, wohingegen die Übertragung eines analogen Signals viel schwieriger und komplexer ist, um eine gute Präzision bei der Übertragung des Signals von der Zone HV zur Zone LV sicher zu stellen.

Nach der Erfindung weist die Steuerschaltung unter anderem einen DC/DC-Spannungskonverter 40 auf, der eine erdfreie Niederspannung LV_{FL} in der Hochspannungszone (Zone HV) erzeugt, um insbesondere den Analog-Digitalkonverter 36 zu versorgen. Auf diese Art und Weise ist die Versorgung des Konverters 36 an die Hochspannung gekoppelt und ist von der Niederspannung entkoppelt, um sich vom Gleichtakt der Phase 2 im Verhältnis zu Niederspannungszone LV zu lösen. Der Spannungskonverter 40 ist bevorzugt über die Niederspannung LV versorgt und weist daher eine interne galvanische Trennung auf.

Erfindungsgemäß ist in der Zone HV eine erdfreie Niederspannungszone (Zone LV_{FL}) vorgesehen, um den Konverter 36 und gleichermaßen, nach einer bevorzugten Variante, den Differenzialverstärker 24 zu versorgen. Man befreit sich demnach vom Gleichtakt der gemessenen Phase und man meidet die mit einem Gleichtakt verbundenen Störungen bei der differenziellen Messung.

Gemäß weiteren Varianten, die im elektrischen Schaltbild der Figur 2 enthalten sind, sind der Subtrahierer 26 und die Konverter 14A, 28 und 34 gleichermaßen über die erdfreie Niederspannung LV_{FL} versorgt.

Es ist ferner zu bemerken, dass erfindungsgemäß das Ensemble der Opto-Koppler-Elemente 20, 30, 32 und 38 eine galvanische Trennung GS zwischen der Zone LV, in welcher sich die elektronische Einheit 6A befindet, und der Zone HV, in welcher sich die Phase 2 und die Versorgungsmittel 4 befinden, im digitalen Teil der Steuerschaltung vorgesehen sind, das heißt zwischen der elektronischen Einheit 6A, wo ein weiterer digitaler Schaltkreis der Zone LV ist und den Konvertern 14A, 28, 34 und 36, die folglich in der Zone HV angeordnet sind. Diese galvanische Trennung GS ist demnach durch ein rein digitales Interface implementiert, welches bei der Übermittlung der digitalen Signale durch das Interface eine sehr hohe Präzision erlauben, wie dies bereits ausgeführt wurde. Die Konverter sind Elemente mit einer Niederspannungsversorgung und nach der Erfindung ist vorgesehen, diese mit einer erdfreien Niederspannung LV_{FL} (zum Beispiel zwischen 5 V und 10 V) zu versorgen, die über den DC/DC-Transformator 40 bereitgestellt wird, der bevorzugt über die Niederspannung LV (zum Beispiel zwischen 12 und 24 Volt) versorgt wird.

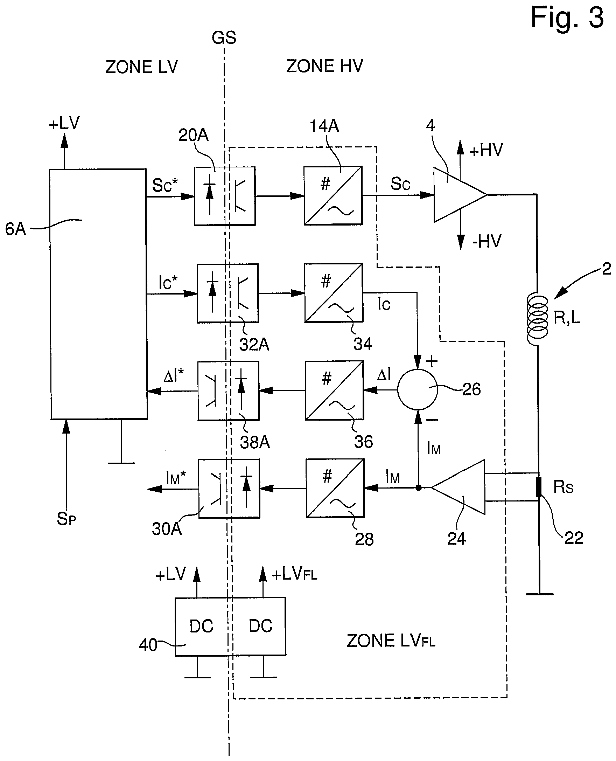

In der Figur 3 ist eine Ausführungsvariante der Steuerschaltung gemäß Figur 2 dargestellt. Die bereits beschriebenen Elemente werden hierbei nicht nochmals erläutert. Diese Variante unterscheidet sich durch den nachfolgend beschriebenen Modus, indem die galvanischen Trennelemente 20A, 30A, 32A und 38A versorgte Elemente sind, um eine Übertragung zu einer weit höheren Frequenz der digitalen Signale zu ermöglichen. Diese Elemente sind einerseits über die Niederspannung LV und andererseits über die erdfreie Niederspannung LV_{FL} versorgt. Man erhält folglich eine hochperformante Motorsteuerung. Diese Variante ermöglicht die Verwendung magnetischer Elemente zur galvanischen Trennung anstelle von optoelektronischen Elementen.

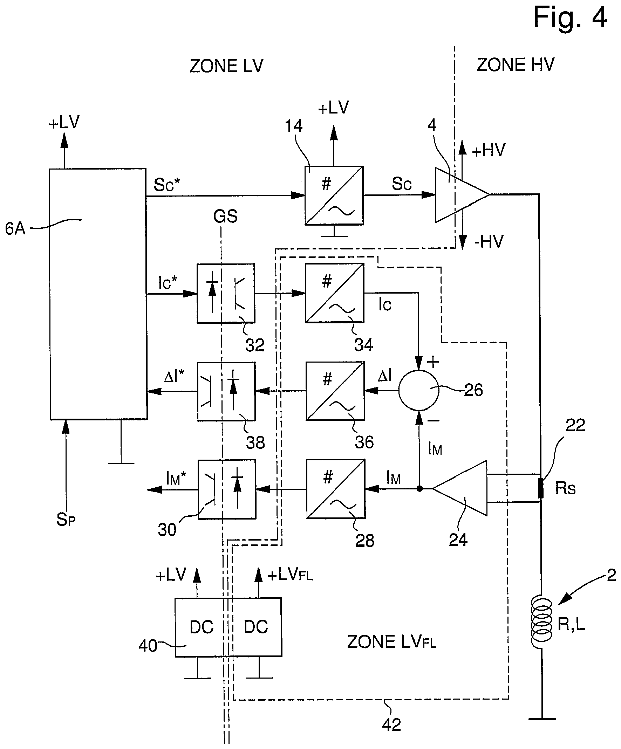

In der Figur 4 ist eine zweite Ausführungsform der Steuerschaltung gemäß der Erfindung dargestellt. Die bereits zuvor beschriebenen Bezugsziffern werden hier nicht erneut erläutert. Wenn die Hochspannung der "Zone HV" kleiner als ein von geltenden Sicherheitsnormen definierter Schwellwert (typischerweise 48 Volt) ist, kann man von einer galvanischen Trennung zwischen dem Leistungsverstärker 4 und der elektronischen Einheit 6A absehen und das Steuersignal S_{C}* direkt dem Digital-Analogkonverter 14 zuführen. Der Konverter 14 ist demnach mit der Niederspannung LV versorgt. Die Konfiguration der anderen Elemente der Steuerschaltung ist ähnlich der ersten Ausführungsform. Die zweite Ausführungsform impliziert, dass man auf eine galvanische Isolation zwischen den Zonen LV und HV verzichtet, und dass die entsprechenden Massen demnach elektrisch verbunden sind. Man zieht dennoch einen Nutzen aus den Vorteilen der Erfindung, indem sämtliche erwähnten Vorteile (insbesondere das Umgehen von Gleichtakt - bedingten Störungen während einer differenziellen Messung) erhalten bleiben. In der Tat bleibt eine galvanische Barriere GS erhalten, insbesondere zwischen, einerseits, den Konvertern 34 und 36 und andererseits der elektronischen Einheit 6A, derart, dass eine Entkopplung zwischen der Niederspannungszone LV und der Zone der erdfreien Niederspannung LV_{FL} erhalten bleibt, wobei letztere Zone in der Hochspannungszone angeordnet ist und dort mit der Hochspannung HV gekoppelt ist, die stark variiert. Man befreit sich somit vom Gleichtakt der Phase.

## Patentansprüche

1. Steuerschaltung eines Elektromotors, der zumindest eine Phase (2) aufweist, wobei die Steuerschaltung über einen ersten Digital-Analogkonverter (14, 14A) ein Steuersignal (S_{C}*,S_{C}) für die elektrischen Hochspannungsversorgungsmittel der Phase erzeugt und eine Steuerung des Versorgungsstroms der Phase über einen Soll-Strom (I_{C}*, I_{C}) aufweist, wobei die elektrischen Versorgungsmittel eine Hochspannungszone (Zone HV) des Elektromotors bestimmen, und wobei die Steuerschaltung umfasst:
- Mittel (22, 24) zum Messen des Versorgungsstroms, die ein erstes Analogsignal (I_{M}) bereitstellen, dessen Wert mit dem Soll-Strom korrespondiert;
- eine elektronische Steuereinheit (6A), die in einer Niederspannungszone (Zone LV) angeordnet ist;
- einen Analog-Digitalkonverter (36), um das Analogsignal (I_{M}) oder ein anderes analoges Signal (ΔI), welches als das Analogsignal fungiert, in ein äquivalentes Digitalsignal (I_{M}*, ΔI) zu konvertieren, welches der elektronischen Steuereinheit (6A) bereitgestellt wird,
**dadurch gekennzeichnet, dass** die Mittel zum Messen durch einen Ableitungswiderstand (22), der in Reihe mit der Phase (2) angeordnet ist und durch einen Differenzialverstärker (24) gebildet werden, dessen Eingänge mit Kontakten des Ableitungswiderstands verbunden sind;
und dass der Analog-Digitalkonverter (36) in der Hochspannungszone angeordnet ist, wobei ein galvanisches Trennelement (38, 38A) zwischen dem Analog-Digitalkonverter (36) und der elektronischen Steuereinheit (6A) angeordnet ist;
und dass die Steuerschaltung einen Spannungskonverter (40) aufweist, der in der Hochspannungszone eine erdfreie Niederspannung (LV_{FL}) bereitstellt, die den Analog-Digitalkonverter (36) versorgt;
und dass die Steuerschaltung einen analogen Subtrahierer (26) aufweist, der in der Hochspannungszone angeordnet ist und am Eingang das erste analoge Signal (I_{M}) empfängt, welches dem gemessenen Strom entspricht und ein zweites analoges Signal (I_{C}) erhält, welches dem Soll-Strom entspricht, wobei der analoge Subtrahierer an seinem Ausgang ein drittes analoges Signal (ΔI) bereitstellt, welches proportional zur Differenz zwischen den ersten und zweiten analogen Signalen ist und daher als Differenz zwischen dem Versorgungsstrom und dem Soll-Strom fungiert, wobei das dritte analoge Signal der elektronischen Steuereinheit (6A) über den Analog-Digitalkonverter (36) und das erste galvanische Trennelement (38, 38A) zugeführt wird und dem Analog-Digitalkonverter nachgeschaltet, das äquivalente digitale Signal (ΔI*) gebildet wird.

2. Steuerschaltung nach Anspruch 1, **dadurch gekennzeichnet, dass** der Spannungskonverter (40) mit der Niederspannung der Niederspannungszone versorgt wird und eine galvanische Isolierung aufweist.

3. Steuerschaltung nach Anspruch 1 oder 2, **dadurch gekennzeichnet, dass** der Spannungskonverter (40) gleichermaßen den Differenzialverstärker (24) versorgt.

4. Steuerschaltung nach einem der vorhergehenden Ansprüche, **dadurch gekennzeichnet, dass** der erste Digital-Analogkonverter (14a) einem zweiten galvanischen Isolationselement (20, 20a) vorgelagert ist, und dass der Spannungskonverter (40) gleichermaßen den ersten Digital-Analogkonverter versorgt.

5. Steuerschaltung nach einem der vorhergehenden Ansprüche, **dadurch gekennzeichnet, dass** das zweite analoge Signal (I_{c}) mittels eines dritten galvanischen Trennelements (32, 32A) gefolgt von einem zweiten Digital-Analogkonverter (34) bereitgestellt wird, der in der Hochspannungszone angeordnet ist und über die erdfreie Niederspannung (LV_{FL}) der elektronischen Steuereinheit versorgt wird.

6. Steuerschaltung nach einem der vorhergehenden Ansprüche, **dadurch gekennzeichnet, dass** der analoge Subtrahierer (26) über die erdfreie Niederspannung (LV_{FL}) versorgt wird.

7. Steuerschaltung nach Anspruch 5, **dadurch gekennzeichnet, dass** das dritte galvanische Trennelement (32A) einerseits über die Niederspannung (LV) und andererseits über die erdfreie Niederspannung (LV_{FL}) versorgt wird.

8. Steuerschaltung nach Anspruch 4, **dadurch gekennzeichnet, dass** das zweite galvanische Trennelement (20A) einerseits über die Niederspannung (LV) und andererseits über die erdfreie Niederspannung (LV_{FL}) versorgt wird.

9. Steuerschaltung nach einem der vorhergehenden Ansprüche, **dadurch gekennzeichnet, dass** das erste galvanische Trennelement (38A) einerseits über die Niederspannung (LV) und andererseits über die erdfreie Niederspannung (LV_{FL}) versorgt wird.

## Claims

1. A control circuit of an electric motor, which has at least one phase (2), wherein the control circuit generates a control signal (S_{C}*, S_{C}) for the electrical high-voltage power supply means of the phase via a first digital/analogue converter (14, 14A) and has a phase power-supply-current control system via a set current (I_{C}*, I_{C}), wherein the electric supply means determine a high-voltage zone (HV zone) of the electric motor and wherein the control circuit comprises:
- means (22, 24) for measuring the power supply current, which provide an analogue signal (I_{M}), the value of which corresponds to the set current;
- an electronic control unit (6A), which is arranged in a low voltage (LV zone);
- an analogue/digital converter (36) in order to convert the analogue signal (I_{M}) or another analogue signal (ΔI), which acts as the analogue signal, into an equivalent digital signal (I_{M}*, ΔI), which is provided to the electronic control unit (6a).
**characterized in that** the means for measurement are formed by a lead resistor (22); which is arranged in series with the phase (2) and by a differential amplifier (24), the inputs of which are connected to contacts of the lead resistor;
and that the analogue/digital converter (36) is arranged in the high-voltage zone, wherein a galvanic isolation element (38, 38A) is arranged between the analogue/digital converters (36) and the electronic control unit (6A);
and that the control circuit has a voltage converter (40), which provides a floating low voltage (LV_{FL}) in the high-voltage zone, which powers the analogue/digital converter (36).
the control circuit is furthermore **characterized in that** the control circuit has an analogue subtracter (26), which is arranged in the high-voltage zone and receives, at the input, the first analogue signal (I_{M}), which corresponds to the measured current and receives a second analogue signal (I_{C}), which corresponds to the set current, wherein the analogue subtracter provides a third analogue signal (ΔI) at its output, which is proportional to the difference between the first and the second analogue signals and therefore acts as the difference between the power supply current and the set current, wherein the third analogue signal is supplied to the electronic control unit (6A) via the analogue/digital converter (36) and the first galvanic isolation element (38, 38A) and the equivalent digital signal (ΔI*) is formed downstream to the analogue/digital converter.

2. Control circuit according to Claim 1, **characterized in that** the voltage converter (40) is powered with the low voltage of the low-voltage zone and features a galvanic insulation.

3. Control circuit according to Claim 1 or 2, **characterized in that** the voltage converter (40) equally powers the differential amplifier (24).

4. Control circuit according to any one of the preceding claims, **characterized in that** the first digital/analogue converter (14a) is upstream from a second galvanic insulation element (20, 20a), and that the voltage converter (40) equally powers the first digital/analogue converter.

5. Control circuit according to any one of the preceding claims, **characterized in that** the second analogue signal (I_{C}) is provided by means of a third galvanic isolation element (32, 32A) followed by a second digital/analogue converter (34), which is arranged in the high-voltage zone and is powered via the floating low voltage (LV_{FL}) of the electronic control unit.

6. Control circuit according to any one of the preceding claims, **characterized in that** the analogue subtracter (26) is powered via a floating low voltage (LV_{FL}).

7. Control circuit according to Claim 5, **characterized in that** the third galvanic isolation element (32A) is powered via the low voltage (LV) on the one hand and via the floating low voltage (LV_{FL}) on the other.

8. Control circuit according to Claim 4, **characterized in that** the second galvanic isolation element (20A) is powered via the low voltage (LV) on the one hand and via the floating low voltage (LV_{FL}) on the other.

9. Control circuit according to any one of the preceding claims, **characterized in that** the first galvanic isolation element (38A) is powered via the low voltage (LV) on the one hand and via the floating low voltage (LV_{FL}) on the other.

## Revendications

1. Circuit de commande d'un moteur électrique, qui comporte au moins une phase (2), dans lequel le circuit de commande génère un signal de commande (S_{C}*, S_{C}**)** destiné aux moyens d'alimentation à haute tension de la phase par l'intermédiaire d'un premier convertisseur numérique-analogique (14, 14A), et comporte une unité de commande du courant d'alimentation de la phase par l'intermédiaire d'un courant nominal (I_{C}*, I_{C}), dans lequel les moyens d'alimentation électriques déterminent une zone à haute tension (zone HV) du moteur électrique, et dans lequel le circuit de commande comprend :
- des moyens (22, 24) destinés à mesurer le courant d'alimentation, qui fournissent un premier signal analogique (I_{M}) dont la valeur correspond au courant nominal ;
- une unité de commande électronique (6A) qui est disposée dans une zone à basse tension (zone LV) ;
- un convertisseur analogique-numérique (36) destiné à convertir le signal analogique (I_{M}) ou un autre signal analogique (ΔI) qui joue le rôle de signal analogique, en un signal numérique équivalent (I_{M}*, ΔI), qui est fourni à l'unité de commande électronique (6A), **caractérisé en ce que** les moyens de mesure sont constitués d'une résistance de dérivation (22) qui est disposée en série avec la phase (2) et d'un amplificateur différentiel (24) dont les entrées sont reliées à des contacts de la résistance de dérivation ;
et **en ce que** le convertisseur analogique-numérique (36) est disposé dans la zone à haute tension, dans lequel un élément de séparation galvanique (38, 38A) est disposé entre le convertisseur analogique-numérique (36) et l'unité de commande électronique (6A) ;
et **en ce que** le circuit de commande comporte un convertisseur de tension (40) qui fournit, dans la zone à haute tension, une basse tension flottante (LV_{FL}) qui alimente le convertisseur analogique-numérique (36) ;
et **en ce que** le circuit de commande comporte un soustracteur analogique (26) qui est disposé dans la zone à haute tension et reçoit en entrée le premier signal analogique (I_{M}), qui correspond au courant mesuré, et obtient un deuxième signal analogique (IM), qui correspond au courant nominal, dans lequel le soustracteur analogique fournit à sa sortie un troisième signal analogique (ΔI) qui est proportionnel à la différence entre les premier et deuxième signaux analogiques et joue par conséquent le rôle de différence entre le courant d'alimentation et le courant nominal, dans lequel le troisième signal analogique est délivré à l'unité de commande analogique (6A) par l'intermédiaire du convertisseur analogique-numérique (36) et du premier élément de séparation galvanique (38, 38A) et le signal analogique équivalent (ΔI*) est déterminé en aval du convertisseur analogique-numérique.

2. Ciruit de commande selon la revendication 1, **caractérisé en ce que** le convertisseur de tension (40) est alimenté avec la basse tension de la zone à basse tension et comporte une isolation galvanique.

3. Ciruit de commande selon la revendication 1 ou 2, **caractérisé en ce que** le convertisseur de tension (40) alimente de manière égale l'amplificateur différentiel (24) .

4. Ciruit de commande selon l'une des revendications précédentes, **caractérisé en ce que** le premier convertisseur numérique-analogique (14a) est disposé en amont d'un deuxième élément d'isolation galvanique (20, 20a) et **en ce que** le convertisseur de tension (40) alimente de manière égale le premier convertisseur numérique-analogique.

5. Ciruit de commande selon l'une des revendications précédentes, **caractérisé en ce que** le deuxième signal analogique (I_{C}) est fourni au moyen d'un troisième élément de séparation galvanique (32, 32A) suivi par un deuxième convertisseur numérique-analogique (34) qui est disposé dans la zone à haute tension et est alimenté par l'intermédiaire de la basse tension flottante (LV_{FL}) de l'unité de commande électronique.

6. Ciruit de commande selon l'une des revendications précédentes, **caractérisé en ce que** le soustracteur analogique (26) est alimenté par l'intermédiaire de la basse tension flottante (LV_{FL}) .

7. Ciruit de commande selon la revendication 5, **caractérisé en ce que** le troisième élément de séparation galvanique (32A) est alimenté d'une part par l'intermédiaire de la basse tension (LV) et d'autre par l'intermédiaire de la basse tension flottante (LV_{FL}).

8. Ciruit de commande selon la revendication 4, **caractérisé en ce que** le deuxième élément de séparation galvanique (20A) est alimenté d'une part par l'intermédiaire de la basse tension (LV) et d'autre par l'intermédiaire de la basse tension flottante (LV_{FL}).

9. Ciruit de commande selon l'une des revendications précédentes, **caractérisé en ce que** le premier élément de séparation galvanique (38A) est alimenté d'une part par l'intermédiaire de la basse tension (LV) et d'autre par l'intermédiaire de la basse tension flottante (LV_{FL}).
